# EUROPEAN PATENT SPECIFICATION

(11) **EP 2 991 446 B1**
(45) Date of publication and mention of the grant of the patent: **06.05.2020**
(21) Application number: 14182298.1
(22) Date of filing: 26.08.2014
(51) Int. Cl.: H05B 6/12

(54) **Induction heating arrangement and induction hob**
Induktionserhitzungseinrichtung sowie Induktionskochfeld
Dispositif de chauffage par induction et table de cuisson à induction

(43) Date of publication of application: 02.03.2016
(73) Proprietor: ELECTROLUX APPLIANCES AKTIEBOLAG, 105 45 Stockholm (SE)
(72) Inventor: Herzog, Michael, 91541 Rothenburg ob der Tauber (DE); Saporetti, Marco, 47122 Forli (IT); Leikam, Jürgen, 91451 Rothenburg ob der Tauber (DE)
(74) Representative: Electrolux Group Patents

(56) References cited:
- EP-A2- 2 170 010
- EP-B1- 2 265 088
- WO-A1-2011/067708
- DE-A1-102009 019 765

## Description

The invention relates to an induction heating arrangement and an induction cooking hob.

In modern household environments, such as kitchen environments, a reason to buy new household appliances is better usability, energy efficiency and a more flexible use of the devices. Thus, the technical focus on developments in this area is directed to improvements regarding usability, energy efficiency and flexibility of the devices.

In the area of cooking hobs, induction heating has become widely available in recent years. A general problem with induction heaters is, however, that the induction coils are located underneath a plate, e.g. a glass ceramic plate and that it is generally difficult to align pots or cooking vessels in general of different sizes exactly to the field of an induction coil in order to maximize the energy transfer from the high-freguency electromagnetic field into the metallic pot.

On the other hand, there are plenty of pots with different shapes, e.g. for fish or for roasts, that widely extend over the area of traditional circular heaters.

There is thus a need with induction hobs to be able to flexibly adapt to a pot size and/or to a pot position of a pot on a surface or top plate of an induction kitchen hob.

Further, there is a need to save as much energy as possible because energy is a costly resource and fossile energy is only limited.

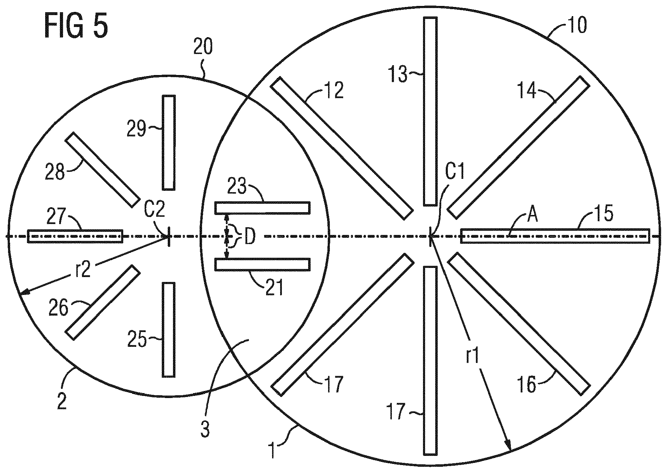

DE 10 2009 019 765 A1 discloses an induction heating arrangement for a grill with several induction coils being arranged under a plate. In one embodiment (Fig 5) a central first induction coil is surrounded symmetrically by three second induction coils having a smaller diameter than the first induction coil. The first coil and the second coils are operated at the same time to provide a homogeneous induction field and uniform heating for the grill placed upon the plate. Magnetic flux guiding elements are provided in the grill but not described in the coils.

In EP 2 265 088 B1 it is disclosed to use an array of circular induction coils arranged in two different layers whereby the arrays in the different layers are horizontally displaced against each other to improve induction power coverage in the cooking field. Depending on the position of a pot on the induction cooking area, induction coils beneath the pot of either one or the other layer are used. In order to avoid interference between the induction coils of the different layers, only coils of one layer are used at a time, which also allows it to reduce the number of power supplies required for the operation of the induction cooking field. All coils are preferably of the same diameter. Six magnetic flux guiding elements made of ferrite material are provided for each induction coil radially extending from a centre of the coil outwardly almost over the complete radius of the coil. In the overlapping regions where two coils overlap the two coils have exactly one guiding element in common which extends on and along an axis that runs in a radial direction of each of the overlapping coils. Three guiding elements form equilateral triangles.

WO 2011/067708 A1 describes an induction heating arrangement with induction coils of substantial rectangular shape. The induction heating arrangement discloses all of the features according to the preamble of claim 1.

EP 2 170 010 A2 discloses an induction heating arrangement with two induction coils that are concentrically arranged with respect to each other. The inner and the outer induction coils are arranged on U-shaped magnetic materials that are kept at a distance from the center of the coils. The respective U-shaped magnetic materials carrying the inner and the outer induction coil are arranged in a manner that allows for minimizing the gap between the inner and the outer induction coil.

EP 2 265 088 B1 describes an induction heating arrangement with a plurality of overlapping induction coils. In each overlapping region between two overlapping induction coils a single essentially rod-shaped guidance element is arranged that extends in the radial direction.

The invention is based on the problem to provide induction heating with at least two overlapping induction coils and efficient guiding of the magnetic flux.

This problem is solved by an induction heating arrangement according to the invention, in particular according to claim 1, and an induction hob according to the invention, in particular according to claim 15.

Embodiments according to the invention are in particular disclosed in the attached claims.

In an embodiment of the invention according to claim 1 the induction heating arrangement comprises at least one first induction coil and at least one second induction coil, the second induction coil partially overlapping with the first induction coil in an overlapping region.

Outside of the overlapping region the first induction coil and the second induction coil are each provided with several respective guiding elements for guiding magnetic flux of the respective induction coil.

Inside or within the overlapping region at least two further guiding elements are arranged for guiding the magnetic flux of the first induction coil and/or of the second induction coil. The two further guiding elements are spaced apart from each other. At least a first one of these further guiding elements is spaced apart from an axis (radial axis) running in a radial direction of the first induction coil as well as in a radial direction of the second induction coil, in particular running through both respective centres of both overlapping induction coils, and is oriented or arranged either parallel to said axis or inclined to said axis.

By means of this specific arrangement of the magnetic flux guiding elements according to the invention magnetic field or flux lines can be guided and concentrated, in particular to the area where they are needed for heating and thus the energy efficiency is increased, as more of the magnetic field lines enter an object such as pot to be heated. In other words the guiding elements for the magnetic flux further improve the concentration of the magnetic field lines and thus the energy transfer capability of the induction heating arrangement and help to improve the magnetic field distribution of the induction heating arrangement which can in particular be fine-tuned and be maintained homogeneous.

Further embodiments of the invention are given in particular in the dependent claims and in the following description and drawings.

In a preferred embodiment at least a second one of the further guiding elements provided in the overlapping region extends on and along said axis (radial axis).

In an advantageous embodiment exactly three further guiding elements are provided in the overlapping region two first ones of these three further guiding elements being arranged spaced apart from said axis and parallel or inclined to said axis and preferably on opposite sides of said axis, and one second one of the three further guiding elements in the overlapping region extending on and along said axis and/or being arranged in between or in the middle of the two first further guiding elements.

In another embodiment exactly two further guiding elements are provided in the overlapping region both being arranged spaced apart from and parallel or inclined to said axis, preferably on opposite sides of said axis.

A further embodiment comprises two first further guiding elements within the overlapping region being inclined at a respective inclination angle to said axis, preferably in opposite inclination directions, i.e. one clockwise and one anticlockwise. Preferably longitudinal axes of the two first guiding elements or the legs of their inclination angles intersect said radial axis at a respective, in particular the same, point of intersection which lies on the same side of the orthogonal projection of the respective guiding element onto said axis as a centre of either the first induction coil or the second induction coil and spaced apart from said centre. Preferably the intersection point is positioned at a larger distance from said orthogonal projection than said centre resulting in particular in an inclination somewhat between parallel and radial direction.

The individual guiding elements outside of the overlapping region extend in a respective radial direction of the respective first induction coil or second induction coil which results in an advantageous and homogeneous magnetic flux guidance.

In an embodiment also at least one first further guiding element inside the overlapping region which is inclined to said axis, extends in a radial direction of the first induction coil or the second induction coil to further improve the guiding of the magnetic flux of that coil.

In a preferred embodiment the further guiding elements in the overlapping region are arranged symmetrically to said axis.

The guiding elements are preferably arranged or attached below or at the underside of the respective induction coil.

The induction heating arrangement may further comprise a support plate for an object to be heated such as a cooking vessel or cooking good carrier, wherein preferably the first induction coil is arranged on, in particular applied thereonto as a structured layer or as a pre-manufactured part, a lower surface of the support plate and wherein preferably the second induction coil(s) is/are arranged further below the plate, in particular attached or arranged at a lower surface of the first induction coil.

According to another embodiment of the invention an induction heating arrangement, may comprise:
- the first induction coil having a first diameter and being arranged in a first plane;
- at least one, preferably two, three or four, second induction coils having at least one second diameter and being arranged in a second plane, wherein each second diameter is smaller than the first diameter, i.e. the first induction coil has a larger diameter than each of the second coils;
- the second induction coils being arranged around (or: encircling or surrounding) the first induction coil or, in other words, the first induction coil being arranged in a centre of the arrangement of the second induction coils, and each of the second induction coils partially overlapping with the first induction coil.

A coil being "arranged in a plane" is to be interpreted in such a way that the coil extends along that plane with the plane passing through the coil. Of course the coil is a three-dimensional technical object and not two-dimensional like a geometrical plane. The expression "in a first (second) plane" could also be replaced in all claims and embodiments by "at a first (second) height" or by "on a respective first (second) level".

The diameter of the coil can be defined as the largest distance between two boundary points of the coil, e.g. in case of a circular coil twice the radius and in case of a square coil the length of the diagonal.

In a further embodiment centres of all second induction coils lie outside of the first induction coil and/or outside of the overlapping regions. Preferably each overlapping region comprises less than 50 % and/or less than 180° angular sector of the corresponding second induction coil.

The induction heating arrangement may advantageously be further improved so that at least two, in particular all, second induction coils have the same diameter and/or size and/or wherein at least one, preferably all, of the induction coils is or are of circular shape and/or wherein at least four second induction coils are provided each being arranged in a corresponding quadrant of a rectangular or square shaped heating area defining heating zones and the first induction coil is arranged around a centre of the heating area extending into each of the quadrants and defining another central heating zone.

Beneficially, according to a further embodiment of the induction heating arrangement according to the present invention, the length of a guiding element for the magnetic flux corresponds to the expansion of a respective induction coil. In this manner, the magnetic field distribution across the induction heating arrangement can be further optimized and tailored according to the need in current kitchen appliances. Also, it can be further optimized in terms of avoiding interference between the corresponding induction coils.

According to a further embodiment of the induction heating arrangement according to the present invention, the induction coil having a larger diameter may comprise guiding elements for the magnetic flux having a different, in particular greater, length. In this manner, the extension of the larger induction coil can be optimally exploited, while at the same time guiding elements for the magnetic flux can be used that are part of the induction coils having a smaller diameter in an area of overlap to focus the magnetic field and homogenize the magnetic field distribution over the induction coil having a larger diameter.

In particular, according to a further embodiment of the induction heating arrangement according to the present invention, the guiding elements for the magnetic flux associated to the induction coil with a larger diameter are arranged outside the area of the induction coils having a smaller diameter. In this manner, the induction coils having a smaller diameter can be shielded against each other, and the magnetic field lines associated to the respective induction coils having a smaller diameter can be concentrated further in the area of the respective smaller induction coils. In this manner, the energy efficiency is further increased and the magnetic field lines are further concentrated in the area where the pot is supposed to be as in traditional heating zones.

Advantageously, according to a further embodiment of the induction heating arrangement according to the present invention, the guiding element for the magnetic flux is made of a ferrite, as ferrite is a material widely available and suitable to guiding element magnetic field lines in household appliances in a particular manner.

In another embodiment of the invention an induction heating arrangement may comprise further a selector or control device configured to operate, including to electrically connect to a power supply, either, in a first operational state, the first induction coil, while not operating, preferably electrically disconnecting, any of the second induction coils or, in a second operational state, to operate, including to electrically connect to a power supply, at least one of the second induction coils while not operating, preferably electrically disconnecting, the first induction coil.

The selector or control device in particular selects or operates only the first induction coil or at least one of the second coils but not the first induction coil together with one or more of the second induction coils.

By the technical measures described the induction heating arrangement can be used for differently sized objects, in particular pans or pots, objects with larger diameter on the first coil and, also several, objects with smaller diameter on the second induction coils but there is still a saving in power and energy consumption and a good efficiency as the overlapping coils will not be operated at the same time and thus electromagnetic losses avoided.

The electromagnetic losses by induced currents are in particular reduced in the preferred embodiment where the coil(s) not operated are electrically disconnected in the respective operational state so that no induced current can flow in or out of the non-operated coil(s).

Each induction coil may define a respective heating zone for an object, in particular a cooking vessel or cooking good carrier, which is usually placed on a support plate or surface above the coil.

Advantageously, the induction heating arrangement according to an embodiment of the present invention combines a larger coil in one plane with at least two, preferably four, smaller coils in another plane. In this manner, a traditional hob configuration having four cooking zones can be constructed while at the same time a larger pot can be accommodated by a larger induction coil.

Beneficially, electromagnetical interference is prevented by disconnecting the coils of one plane by means of the selector which maximizes the energy efficiency and at the same time reduces the maximum number of power supply circuitries. In one embodiment the induction heating arrangement comprises at least one power supply for the induction coils, being controlled by the selector or control device, wherein the selector or control device, in the first operational state, electrically connects the first induction coil and electrically disconnects all second induction coils to or from the respective power supply and, in the second operational state, electrically connects at least one of the second induction coils and electrically disconnects the first induction coil to or from the respective power supply. That way an electrical current induced by the operated coil cannot flow in or out the disconnected coil and thus energy losses are further reduced. Preferably the number of power supplies is smaller than the number of induction coils.

In an advantageous embodiment centres or centre points of all second induction coils lie outside of the first induction coil and/or outside of the overlapping regions. Furthermore, preferably each overlapping region comprises less than 50 % and/or less than 180° angular sector of the corresponding second induction coil. This allows for the remaining larger section of the coils to be constructed in a conventional way and in particular equipped with magnetic flux guiding elements.

Preferably at least two, in particular all, second induction coils have the same diameter.

Preferably all induction coils are of circular shape, but other shapes like oval or ellipsoidal or polygonal (e.g. triangular, rectangular, hexagonal) shapes are also possible.

In a preferred embodiment, being in particular suitable for a conventional cooking hob, at least four second induction coils are provided each being arranged in a corresponding quadrant of a rectangular or square shaped heating area defining heating zones. The first induction coil is then arranged around a centre of the heating area and extends into each of the quadrants and defines another, central heating zone.

Beneficially, according to a further embodiment of the induction heating arrangement according to the present invention, it is equipped with a power supply circuitry, wherein the power supply circuitry can serve induction coils on one plane and equally a larger induction coil on another plane. Thus, the number of power supply circuitry required in this induction heating arrangement is less than the number of induction coils used depending on the number of coils allocated to the different planes.

Beneficially, according to a further embodiment of the induction heating arrangement according to the present invention, the number of power supply circuitry is lower than the number of induction coils used in the induction heating arrangement, whereas by use of the selector, the induction coils of one plane are disconnected and thus require no power supply circuitry. A lower number of circuits improves the reliability and facilitates the manufacturing of the induction heating arrangement, as lesser parts require less manufacturing effort and entail lower costs.

The selector or control device is preferably coupled to a user input selecting device, comprising any kind of actuating or interacting element(s) such as rotary or pushing or sliding knobs or buttons or switches or touch elements or touch screens etc. to select the first induction coil and respective heating zone or one or more of the second induction coils or heating zones, in particular separately or individually.

The induction heating arrangement may comprise a support plate with a support surface for placing an object to be heated such as a cooking vessel or cooking good carrier.

The first induction coil may be arranged on a lower surface of the support plate facing away from the support surface and in particular applied thereonto as a structured layer or, e.g. g by gluing, as a pre-manufactured part.

Preferably the second induction coils are arranged further below the plate than the first induction coil, in particular attached or arranged at a lower surface of the first induction coil.

The guiding elements in each overlapping region may be fixed to the corresponding second induction coil, preferably at a lower side or surface facing away from the first induction coil and/or the support plate.

The guiding elements outside of the overlapping regions may be fixed, e.g. glued, to the respective induction coil, esp. at its underside.

Beneficially, according to a further embodiment of the induction heating arrangement according to the present invention, this is arranged beneath a pot support or hob plate, wherein the induction coil having a larger diameter is arranged on the pot support. In this manner, parts are saved and the distance to the cooking area is as short as possible.

Beneficially, an induction cooking hob according to the present invention comprises an induction heating arrangement according to the present invention, because in this manner a flexible reliable and power-saving induction hob can be realized that is attractive for a potential customer.

The invention will in the following be explained further on the basis of examples shown in drawings, wherein:
- FIG 1: depicts an induction heating arrangement having two overlapping induction coils according to an embodiment of the present invention,
- FIG 2: shows an induction heating arrangement having two over-lapping induction coils according to another embodiment of the present invention,
- FIG 3: illustrates an induction heating arrangement having two overlapping induction coils according to yet another embodiment of the present invention,
- FIG 4: depicts an induction heating arrangement having two overlapping induction coils according to a further embodiment of the present invention,
- FIG 5: shows an induction heating arrangement having two over-lapping induction coils according to another embodiment of the present invention,
- FIG 6: shows an induction heating arrangement, in particular for an induction cooking hob, having five induction coils according to a further embodiment of the present invention,
- FIG 7: shows a side view of an induction heating arrangement of FIG 6,
- FIG 8: depicts an induction hob according to an embodiment of the present invention and
- FIG 9: illustrates a method for operating an induction heating arrangement.

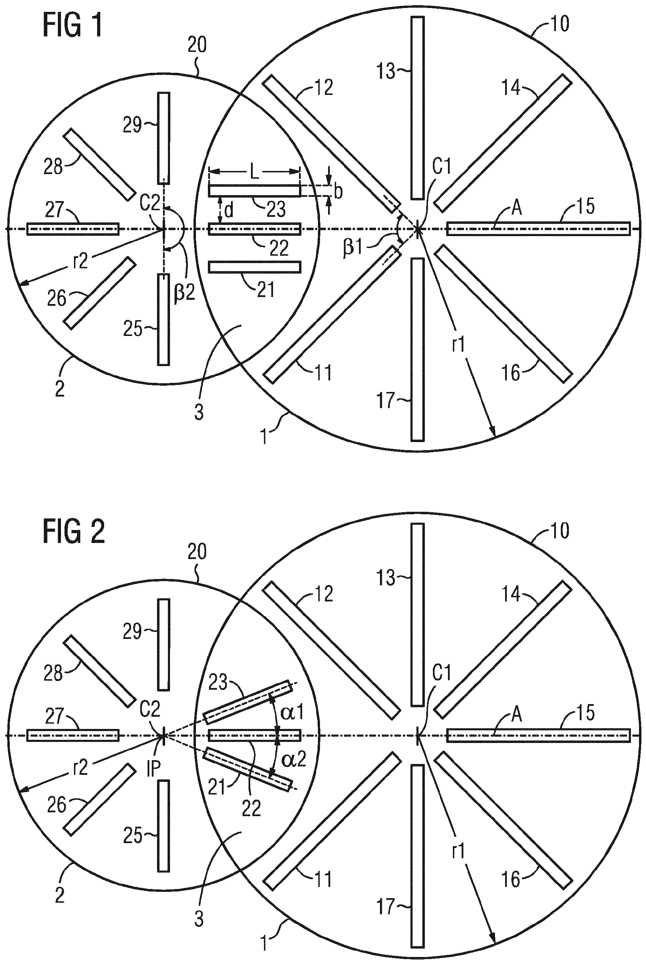

In the embodiments shown in FIG 1 to FIG 5 a first induction coil 1 having a centre C1 and a radius r1 and an outer circular edge or rim 10 and a second induction coil 2 having a centre C2 and a radius r2 and an outer circular edge or rim 20 are provided. The centres C1 and C2 lie on a common axis A which is drawn as a horizontal axis the position, however, is not important. The radius r1 of the first induction coil 1 is larger than the radius r2 of the second induction coil 2, in particular so that r2 < r1 < 2·r2, which means that the first induction coil 1 is greater than the second induction coil 2.

The two induction coils 1 and 2 overlap in an overlapping region 3 enclosed by their two intersecting rims 10 and 20 wherein the distance between the two centres C1 and C2 along the axis A is chosen to be greater than r1 but smaller than r1 + r2 and preferably smaller than 2·r1.

Each one of the induction coils 1 and 2 can be operated separately by supplying the individual induction coil 1 or 2 with a corresponding electric alternating or time variable current, in particular of high frequency, to generate, by electromagnetic induction, a magnetic induction field around the induction coil 1 or 2 which follows the changes of the electric current in the induction coil 1 or 2 in time. This induction field is then used to inductively heat an object, in particular cooking vessel, placed within the induction field of the induction coil 1 or 2, in particular above the induction coil 1 or 2, in a per se known manner. This arrangement of at least two overlapping induction coils 1 and 2 allows for a variable heating zone or adaption to different sizes of objects to be heated as either the smaller coil 2 or the larger coil 1 or, if required, even the combination of coils 1 and 2 can be operated.

The magnetic flux or field of the induction coils 1 and 2 when operated needs to be guided. This is achieved by magnetically conducting guiding elements which concentrate and guide the magnetic flux or field lines and avoid too large losses of energy.

Therefore, as a first measure, outside of the overlapping region 3, each induction coil 1 and 2 is provided with respective flux guiding elements for guiding the magnetic flux when a magnetic induction field is generated by the induction coils 1 and/or 2. The guiding elements are in particular formed as rods or longitudinally or linearly extending elements made of magnetic material and preferably arranged, with their longitudinal axis or linear direction radially or in a radial direction with respect to the respective centre C1 or C2 of the respective induction coil 1 or 2. Each line going through the centre C1 or C2 or along a radius r1 or r2 defines a radial direction for the respective coil 1 or 2. The length of each guiding element in radial direction is advantageously chosen to be above 50 %, preferably at least 60 % or even 80 %, of the radius r1 or r2 of the respective coil 1 or 2 to provide a uniform guidance for the magnetic flux.

In the embodiments shown in FIG 1 to 4 there are for example seven guiding elements 11, 12, 13, 14, 15, 16 and 17 of the first induction coil 1 and five guiding elements 25, 26, 27, 28 and 29 of the second induction coil 2. In each case one guiding element, 15 of the first induction coil 1 and 27 of the second induction coil 2, is arranged on the axis A, and two guiding elements, 13 and 17 of the first induction coil 1 and 27 and 29 of the second induction coil 2, are arranged orthogonally or in a direction perpendicular to the axis A diametrically opposed or on opposite sides of the respective centre C1 or C2. The guiding element 14 is arranged in between the guiding elements 13 and 15 and the guiding element 16 in between the guiding elements 15 and 17, preferably in each case in the middle or at an angle of 45°. The guiding element 11 is arranged diametrically opposed to the guiding element 14 with respect to the centre C1 and the guiding element 12 is arranged diametrically opposed to the guiding element 16 with respect to the centre C1. The guiding element 26 is arranged in between the guiding elements 25 and 27 and the guiding element 28 in between the guiding elements 27 and 29, preferably in each case in the middle or at an intermediate angle of 45°. The included angle β1 between the guiding elements 11 and 12 of the first induction coil 1 adjacent to the overlapping region 3 is therefore 90° in these exemplary embodiments but can also be different, in particular in between 80° and 110°. The included angle β2 between the guiding elements 25 and 29 of the second induction coil 2 adjacent to the overlapping region 3 is 180° in these exemplary embodiments but can also be different, in particular in between 90° and 180°.

The radius r2 and the rim 20 of the second induction coil 2 or the overlapping region 3 is chosen to fit into the intermediate angle β1 in between the two guiding elements 11 and 12 preferably at a rather short distance. The radius r1 and the rim 10 of the second induction coil 1 or the overlapping region 3 is also chosen to fit into the intermediate angle β2 in between the two guiding elements 25 and 29 preferably at a rather short distance.

There may also be more than than just one second induction coil 2 overlapping with the first induction coil 1 for instance in between the guiding elements 12 and 14 or 14 and 16 or 16 and 18 thereby replacing or omitting the intermediate guiding element 13 or 15 or 17 respectively.

Now, as an additional measure according to the invention, inside the (or each) overlapping region 3 at least two respective further guiding elements, e.g. 21 and 23, or preferably at least three further guiding elements, e.g. 21, 22 and 23, are provided which are shared by both induction coils 1 and 2 or which guide the magnetic flux of each induction coil 1 and 2 during its respective operation.

In the embodiments of FIG 1, FIG 2, FIG 3 and FIG 4 there are three guiding elements 21, 22 and 23 and in the embodiment of FIG 5 there are two guiding elements 21 and 23 arranged in the overlapping region 3. More than three guiding elements are also possible.

In FIG 1 to 4 the guiding element 22 is arranged on or along the axis A, and thus radially with respect to the centres C1 and C2 of both induction coils 1 and 2. This is the in many respects optimal position for a magnetic flux guiding element as it has a radial orientation for both coils which leads to a preferred magnetic flux conduction and influence on the flux or field lines in radial direction for both coils.

Furthermore, in FIG 1, 2, 3 and 4 there are provided two further guiding elements 21 and 23 within the overlapping region 3 arranged at a distance or spaced apart from or displaced from the axis A. The guiding element 22 is preferably arranged in the middle of or in between the two guiding elements 21 and 23. Preferably, the two guiding elements 21 and 23 are arranged symmetrically with each other with respect to the axis A or with respect to the guiding element 22.

The further guiding elements 21 and 23 in addition to the generic guiding element 22 increase the magnetic conductivity and guidance for the magnetic flux in the overlapping region 3 and allow for an increase in the area of the overlapping region 3 without losing too much homogeneity of the magnetic flux or field, although they cannot be arranged radially with respect to both coils 1 and 2 at the same time. The design and orientation and position of the further guiding elements 21 and 23 with respect to the axis A or guiding element 22 may be varied and adapted to a preferred magnetic flux lines distribution in case of individual operation of each of the coils 1 and 2 or also in case of a common operation of both coils 1 and 2 if required.

In FIG 1 the two guiding elements 21 and 23 are oriented in parallel to the axis A at a predetermined, preferably the same, distance d from the guiding element 22 which distance d can be varied within the shape of the overlapping region 3 but is usually smaller than the length L of at least one of the guiding elements 21, 22 and 23 and larger than their width w.

In this embodiment the guiding elements 21, 22 and 23 are of the same length L and same width w but of course they may have different lengths and widths, e.g. the middle element 22 have a larger length and width than the two outer elements 21 and 23.

This parallel arrangement provides for an averaging of the magnetic flux in between the radial directions of both induction coils 1 and 2.

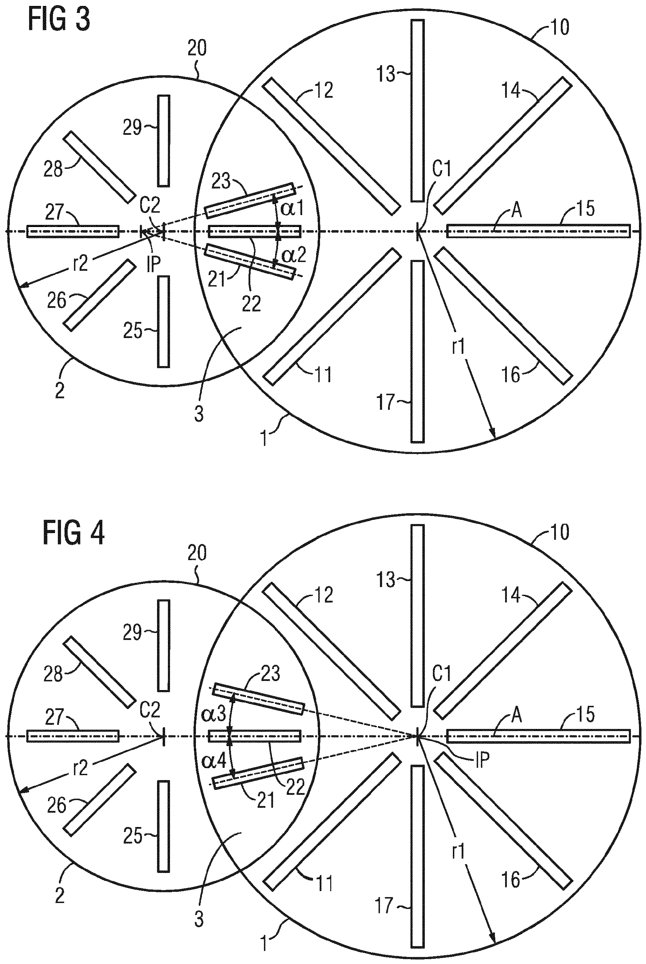

In FIG 2 and 3 the two outer guiding elements 21 and 23 are oriented at a respective inclination angle α1 or α2 to the axis A, wherein preferably α1 = α2, but with opposite inclination direction (clockwise and anticlockwise). The inclination is chosen such that the longitudinal axes of the guiding elements 21 and 23 or the legs of the inclination angles α1 and α2 intersect the axis A at a point of intersection IP which is on the same side of the orthogonal projection of the respective guiding element 21 or 23 onto the axis A as the centre C2 of the second induction coil 2, in FIG 2 and 3 on the left towards, at or behind the centre C2, whereas the centre C1 of the first induction coil 1 is on the opposite side of said projection.

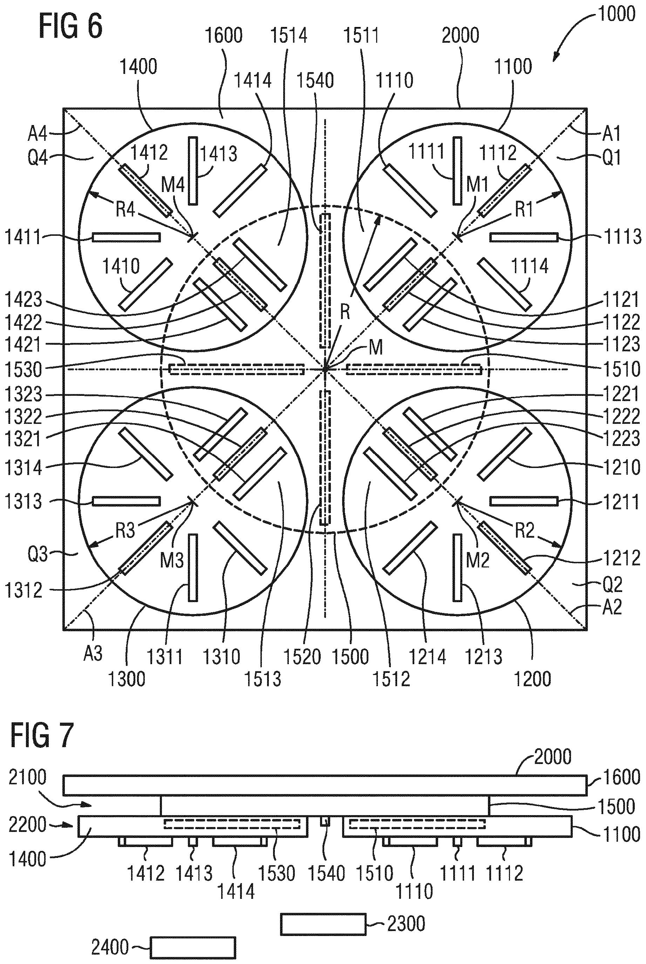

If the point of intersection IP is in or coincides with the centre C2 this results in a radial orientation also of the guiding elements 21 and 23 with respect to C2. Such an embodiment is shown in FIG 2, the inclinations are chosen in such a way that the two guiding elements 21 and 23 are arranged radially with respect to the centre C2 of the second induction coil 2. This type of arrangement with the guiding elements 21 and 23 inclined as shown e.g in FIG 2 and described leads to an optimisation of the magnetic flux of the second induction coil 2, but is not optimal for the first induction coil 1. Nevertheless, this is in particular advantageous if there are more than one second induction coils 2 overlapping with the same first induction coil 1, such as e.g. shown in FIG 6 for e.g. four second induction coils, where the optimisation of four coils is preferred over the optimisation of just one coil.

However an inclination deviating from a radial direction with respect to C2 may also be advantageous.

As shown for example in FIG 3 the point of intersection IP on the axis A may also be on the opposite side of the centre C2 than the projection of the guiding element 21 or 23 onto the axis A and the inclination thus will be less steep than a radial direction and with decreasing inclination angles α1 and α2 (with the point of intersection IP moving further outwardly) become closer to a parallel orientation as shown in FIG 1 and the flux guidance will be more averaged between the two coils 1 and 2.

If the point of intersection IP on the axis A is on the same side of the centre C2 as the projection of the guiding element 21 or 23 onto the axis A (not shown) the inclination becomes steeper than a radial direction and with increasing inclination angles α1 and α2 gets closer to a orthogonal orientation with respect to the axis A which is only possible in special cases.

The inclination angles α1 and α2 can of course also be larger or smaller than shown, either in radial orientation or also in a deviation from the radial orientation and are generally chosen from the interval or range from 0° to 90°, preferably 0° to 60°.

In another embodiment, as shown for instance in FIG 4, the two outer guiding elements 21 and 23 are inclined in the opposite direction than in FIG 2 to 3 at a respective inclination angle α3 or α4 to the axis A, wherein preferably α3 = α4, but with opposite inclination direction (clockwise and anticlockwise). The inclination is, in this embodiment, chosen such that the longitudinal axes of the guiding elements 21 and 23 or the legs of the inclination angles α3 and α4 intersect the axis A at a point of intersection IP which is on the same side of the orthogonal projection of the respective guiding element 21 or 23 onto the axis A as the centre C1 of the first induction coil 2, in FIG 4 on the right side towards, at or behind the centre C1, whereas the centre C2 of the second induction coil 2 is on the opposite side of said projection.

If the point of intersection IP is in or coincides with the centre C1, which embodiment is shown in FIG 4, this results in a radial orientation also of the guiding elements 21 and 23 with respect to C1. This type of arrangement with the guiding elements 21 and 23 radially inclined as shown leads to an optimisation of the magnetic flux of the first induction coil 1, but is not optimal for the second induction coil 2, which makes sense if the first induction coil 1 is larger and has a larger magnetic flux than the second induction coil 2.

However an inclination deviating from a radial direction with respect to C1 may also be advantageous. If the point of intersection IP on the axis A is on the opposite side of the centre C1 than the projection of the guiding element 21 or 23 onto the axis A the inclination is less steep than a radial direction and with decreasing inclination angles α3 and α4 becomes closer to a parallel orientation as shown in FIG 1 and the flux guidance is more averaged between the two coils 1 and 2. The point of intersection IP on the axis A may also be on the same side of the centre C1 as the projection of the guiding element 21 or 23 onto the axis A the inclination becomes steeper than a radial direction and with increasing inclination angles α3 and α4 gets closer to a orthogonal orientation with respect to the axis A which is only possible in special cases.

The inclination angles α3 and α4 can of course also be larger or smaller than shown, either in radial orientation or also in a deviation from the radial orientation and are generally chosen from the interval or range from 0° to 90°, preferably 0° to 50°.

So, the inclination of the guiding elements 21 and 23 to the axis A should preferably be in a range from a parallel orientation to the axis A (no inclination, α1, α2, α3 and α4 equal to 0°, no intersecting point IP) up to a radial orientation with respect to one of the centres C1 and C2 of the two overlapping induction coils 1 and 2.

The shapes or rims 10 and 20 of the induction coils 1 and 2 need not be circular as shown, other shapes or rims are possible too such as e.g. elliptic or oval or rectangular or square or spiral shapes or rims, for which shapes a centre and thus a radial direction with respect to the centre are defined.

As FIG 6 shows, an induction heating arrangement 1000, which is preferably used for or comprised by an induction cooking hob, comprises a, preferably rectangular shaped, in particular square shaped, heating, in particular cooking, area 2000, which is usually covered by a plate 1600, e.g. made of glass ceramics.

The rectangular, in particular square shaped heating, in particular cooking, area 2000 has four quadrants Q1, Q2, Q3 and Q4 the diagonals of which reaching from the centre of the heating area 2000 M to the respective corner being designated by A1, A2, A3 and A4 respectively. In the middle of the heating area a, preferably single, first induction coil 1500 is located having a centre M that preferably is positioned at the centre of the heating area 2000 and preferably being of circular shape with a radius R around the centre M and thus a diameter of 2R.

Preferably in each quadrant Q1 to Q4 an individual respective second induction coil 1100 in Q1, 1200 in Q2, 1300 in Q3 and 1400 in Q4 is arranged, which is preferably of circular shape, the respective coil centres being designated by M1, M2, M3 and M4 and respective coil radii being designated by R1, R2, R3 and R4 respectively. In the embodiment shown all radii R1 to R4 and thus diameters are equal, i.e. the second induction coils are of the same size, however also at least one of them can differ also, for instance two coils, e.g. opposite ones like 1100 and 1300 having one size or diameter and the other two another diameter or radius as is a known configuration in traditional cooking hobs.

Each line going through the centre M or M1 to M4 defines a radial direction for the respective coil.

In this symmetric embodiment shown each centre M1 to M4 of a second induction coil 1100, 1200, 1300 or 1400 coincides with a centre of the respective quadrant and lies, like the centre M of the first induction coil 1500, on the respective diagonal A1 to A4, in fact in its middle, and, further, the diagonals A1 to A4 of the quadrants coincide with or are coaxial with radial directions of the first induction coil 1500 as well as of the respective second induction coil 1100, 1200, 1300 or 1400 in the respective quadrant Q1 to Q4.

As can further be seen, the first induction coil 1500 and each of the second induction coils 1100, 1200, 1300 and 1400 overlap horizontally or in radial directions and, for this reason, are arranged in different planes or at different heights or levels, as will be further apparent from FIG 2. The inner first induction coil 1500, in its plane, extends further outwardly into ta region above or below each of the second induction coils in their respective plane, thus resulting in an overlapping of the coils in a projection orthogonal to their planes. The second induction coil 1100 overlaps with the first induction coil 1500 in an overlapping region (or: area) 1511, The second induction coil 1200 overlaps with the first induction coil 1500 in an overlapping region (or: area) 1511, the second induction coil 1300 overlaps with the first induction coil 1500 in an overlapping region (or: area) 1513 and the second induction coil 1400 overlaps with the first induction coil 1500 in an overlapping region (or: area) 1514.

The radius R or diameter 2R of the inner first induction coil 1500 is chosen larger than the maximum of all radiii R1 to R4 of the second induction coils 1100 to 1400 but also smaller than the minimum of all distances of the centre M of the first induction coil 1500 to the centres M1 to M4 of the second induction coils 1100 to 1400. This means that all centres M1 to M4 of the second induction coils 1100 to 1400 lie outside of and are not covered by the first induction coil 1500 and, thus, the overlapping regions 1511 to 1514 cover less than 50 % of the area and less than 180° of the angular section of the corresponding second induction coils 1100 to 1400. This allows for the remaining non overlapping areas of more than 50 % and angular sections of more than 180° of the second induction coils to be equipped with magnetic flux guiding elements in a conventional manner, preferably in radial direction, as will be explained later.

The second induction coils 1100, 1200, 1300 and 1400 are, thus, arranged in a classical cooking hob pattern occupying quadrants Q1 to Q4 of a rectangular or square shaped cooking area 2000, which is usually covered by a hob plate 1600. Each of these coils and quadrants defines a cooking zone for placing a respective cooking vessel, wherein each cooking zone can be used and controlled separately.

However, in addition to this classical pattern of quadrant cooking zones the first larger induction coil 1500 is provided around the centre of the cooking area stretching or extending out into each of the quadrants thereby overlapping each second induction coil and defining another, here fifth, cooking zone which is larger than the four other cooking zones and allows for larger cooking vessels to be placed onto the plate 2000 in its middle. When the first induction coil 1500 and its larger central cooking zone is operated the other cooking zones are inoperable or not in use, preferably electrically disconnected, at the same time, so that in the overlapping regions undesired effects on the induction field and inductive energy losses are avoided.

However, beside the classical quadrant configuration, any other configuration and number of smaller induction coils surrounding the inner larger induction coil is conceivable as needed at the customer's premises, for instance two or three outer cooking zones or second induction coils with a central larger cooking zone or first induction coil.

Further, it can be seen that in this embodiment, which can also be considered to be a preferred embodiment, guiding elements for the magnetic field lines respectively the magnetic flux are provided associated to respective induction coils.

The induction coil 1100 here has guiding elements 1110, 1120 and 1115. The induction coil 1200 has guiding elements 1210 and 1220. The induction coil 1500 has guiding elements 1510, 1520, 1530 and 1540, whereas the induction coil 1300 has guiding elements 1310, 1315 and 1320. Further, the induction coil 1400 has guiding elements 1409, 1420 and 1407. For the purpose of better visibility, not all of the guiding elements for magnetic flux have been equipped with reference signs. However, at each induction coil, different ones have been referenced so that it is clear that all the induction coils have guiding elements for magnetic field lines that can be referenced.

It further can be observed that outside of the induction coil having a larger diameter 1500, the guiding elements for the magnetic flux of the respective induction coils having a smaller diameter 1100, ..., 1400 are arranged in a radial pattern or in radial directions. Here, the number of these guiding elements is five, but any other number may be chosen. It can also be seen that these guiding elements 1115, 1110 cover approximately 40% of the radius of the induction coil having a smaller diameter, in particular 35% and especially 45%. On the other hand, in an area of overlap 1700 with the larger induction coil 1500, guiding elements for the magnetic flux 1120, 1220, 1320 and 1410 are arranged in a different pattern. Here, three of them are arranged in parallel to a radial direction in the area of overlap. In particular, by this special pattern, the magnetic field emanated by the induction coil having a larger diameter 1500 can be further focused in the area of the induction coil which allows it to improve the energy efficiency and to increase the number of field lines that enter a pot placed in the area of the induction coil 1500 with a larger diameter. As further is depicted, in the area of the induction coil having a larger diameter 1500, guiding elements for the magnetic flux 1510 to 1540 are provided, while they are placed outside of the area taken by respective induction coils with a smaller diameter 1100, ..., 1400.

In this manner, the magnetic field emanated by the larger induction coil 1500 can be further homogenized, while at the same time interference between the induction coils having a smaller diameter 1100, ..., 1400 can be prevented, respectively the magnetic fields emanated by respective smaller induction coils 1100, ..., 1400 can be focused and confined to the quadrant of the heating arrangement where they are located. It is further shown in the drawing that the guiding elements for the magnetic flux 1510, ..., 1540 associated to the induction coil with the larger diameter 1500, almost cover 90% of the radius of the larger induction coil respectively, in particular 95%, or more particular 85%. In particular, the induction coils having a smaller diameter have a diameter of 200 mm, more particular 205 mm and most particular 210 mm, whereas the induction coil having a large diameter has a diameter of 275 mm, more particular 280 mm and most particular 285 mm.

Beneficially, the induction coil having a larger diameter 1500 is applied directly in the form of a metallic coating to a glass ceramic plate 1600 supporting the induction heating arrangement.

In FIG 7 the hob plate, e.g. glass ceramic plate, 1600 can be seen and the larger induction coil 1500 is depicted, which is e.g. applied directly in the form of metal layers structured in form of coil windings to the bottom surface of the hob plate 1600.

On the other hand, the magnetic guiding elements 1540 and 1510 are placed underneath the first induction coil 1500 and also one 1540 is shown here. They may be fixed e.g. be glued to the induction coil 1500 directly. Also, in this view, two second induction coils with a smaller diameter 1400 and 1100 are depicted. It can be observed that the smaller induction coils 1100 and 1400 each overlap with the larger induction coil 1500 and that they are applied directly underneath the large induction coil in order to emanate the magnetic field lines as close as possible to the plate 1600 where the pots are supposed to be placed.

Further, two planes 2100, 2200 are depicted. Each plane houses a respective induction coil/group of induction coils. Plane 2100 here is the plane where the larger induction coil 1500 is located and plane 2200 here is the plane where the four smaller induction coils 1400 to 1100 are located. Further, a selector 2300 is depicted and the energy supply circuitry 2400. Those devices are in a known manner connected to the induction coils 100 to 1500. The purpose of the selector is to disconnect an induction coil located on a respective plane, once an induction coil on another plane is operated. In this manner, less power supply circuitry 2400 is needed in order to supply the induction coils of the respective induction heating arrangement and coupling effects as well as interference are avoided.

Further, guiding elements for magnetic flux 1409, 1407, 1115 on the smaller induction coils are depicted which are fixed to, e.g. glued to, the underside facing away from the first induction coil 1500 of the respective second induction coil 1100 or 1400.

The problem of properly covering the area where the pot is located is solved in a manner of allocating overlapping induction coils to different planes, wherein a larger induction coil 1500 is used to heat larger pots located on the plate 1600, one or more of the smaller induction coils 1100 to 1400 are used to cook in smaller pots located on quadrants of the plate 1600.

Also plural or several induction coils 1100 to 1400 can be grouped together in order to operate neighboring induction coils, e.g. 1100 and 1200, as a common cooking zone to support a lengthy or oblong pot or cooking vessel thereon.

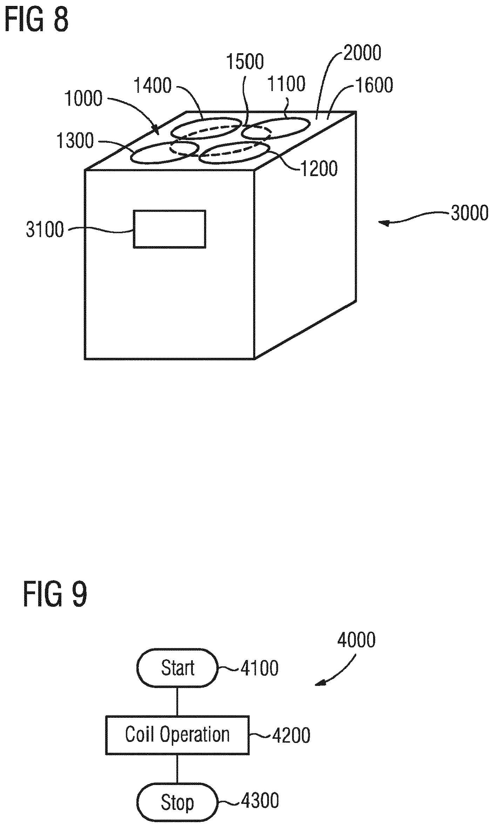

As FIG 8 shows, the induction hob 3000 comprises an induction heating arrangement 1000 according to the present invention having second induction coils with a smaller diameter 1100 to 1400, a glass ceramic plate 1600 and a first induction coil having a larger diameter 1500.

The induction hob 3000 further comprises a control and display device 3100 for the user to manually control the operation of the induction hob 3000. In particular, the control and display device 3100 may issue user control commands to the selector 2300 and may be allocating power supply circuitry 2400. In particular, the operation of the induction hob 3000 may be controlled in such a manner that once the induction coil having the larger diameter 1500 is operated, at least one, preferably all second induction coils having a smaller diameter 1100, 1200, 1300, 1400 is or are disconnected from the power supply in order to avoid interference respectively coupling in of electromagnetic waves into the smaller coils and heating of the smaller coils by the larger coil. The same takes place for the coil having a larger diameter 1500, once the coils in the second plane 2200 are operated. The control and display device 3100 preferably only allows for a user to select either the first cooking zone and its associated first induction coil 1500 or, alternatively, one or more of the second induction coils 1100 to 1400 as single or combined cooking zones.

As FIG 8 shows, the method 4000 for operating an induction heating arrangement for e.g. the induction hob 3000 comprises a minimum number of steps 4100, 4200, 4300. At 4100 the method is started, e.g. by a user activating the induction hob 3000. At 4200 it is ensured, that e.g. the induction coils 1100 to 1500 on one of the planes 2100 or 2200 are exclusively operated. The non operated induction coils maybe completely disconnected from power respectively short circuited e.g. by the selector 2300. The number of power supply circuitry can be minimized and the coupling and interference between the coils 1100 to 1500 can be reduced. At 4300 the method is ended, e.g. by a user switching off the induction hob 3000.

### List of reference numerals

- 1, 2: induction coil
- 3: overlapping region
- 11 to 17: guiding elements for magnetic flux
- 21 to 23: guiding elements for magnetic flux
- 25 to 29: guiding elements for magnetic flux
- 1000: induction heating arrangement
- 1600: support plate
- 1100, 1200, 1300, 1400: second induction coil
- 1500: first induction coil
- 1700: overlapping region
- 1111 to 1114, 1120 to 1123: guiding elements for magnetic flux
- 1211 to 1214, 1220 to 1223: guiding elements for magnetic flux
- 1311 to 1314, 1320 to 1323: guiding elements for magnetic flux
- 1411 to 1414, 1420 to 1423: guiding elements for magnetic flux
- 1510, 1520, 1530, 1540: guiding elements for magnetic flux
- 2000: heating/cooking area
- 2100: first plane
- 2200: second plane
- 2300: selector
- 2400: power supply
- 3000: induction hob
- 3100: control and display device
- 4000: operation method
- 4100, 4200,: 4300 method steps
- r1, r2: radius
- A: axis
- C1, C2: centre
- α1, α2, α3, α4: inclination angle
- β1, β2: included angle
- b: width
- d, D: distance
- L: length
- IP: intersection point
- A1, A2, A3, A4: diagonal
- M, M1, M2, M3, M4: centre
- Q1, Q2, Q3, Q4: quadrant
- R1, R2, R3, R4: radius

## Claims

1. An induction heating arrangement (1000) comprising:
- a support plate (1600),
- at least one first induction coil (1, 1500) arranged at a first level with respect to the support plate (1600)
- at least one second induction coil (2, 1100, 1200, 1300, 1400) arranged at a second level with respect to the support plate (1600),
- the second induction coil (2, 1100, 1200, 1300, 1400) partially overlapping with the first induction coil (1, 1500) in an overlapping region (3, 1511, 1512, 1513 1514),
- wherein outside of the overlapping region (3, 1511 to 1514) the first induction coil (1, 1500) and the second induction coil (2, 1100, 1200, 1300, 1400) are each provided with several respective guiding elements (11 to 17, 25 to 29, 1110 to 1114, 1210 to 1214, 1310 to 1314, 1410 to 1414) for guiding magnetic flux of the respective induction coil, **characterized in that**
- within the overlapping region (3, 1511 to 1514) at least two further guiding elements (21, 22, 23, 1121, 1122, 1123, 1221, 1222, 1223, 1321, 1322, 1323, 1421, 1422, 1423) for guiding the magnetic flux of the first induction coil (1, 1500) and/or the second induction coil (2, 1100, 1200, 1300, 1400) are arranged at a distance (d,D) from each other,
- at least a first one (21, 23, 1121, 1123, 1221, 1223, 1321, 1323, 1421, 1423) of the further guiding elements being spaced apart from an axis (A), which axis (A) runs in a radial direction of the first induction coil (1, 1500) from a centre (C1) of the first induction coil (1, 1500) and in a radial direction of the second induction coil (2, 1100, 1200, 1300, 1400) to a centre (C2) of the second induction coil (2, 1100, 1200, 1300, 1400), and being oriented or arranged parallel to or inclined to said axis (A).

2. The induction heating arrangement (1000) according to claim 1, wherein at least a second one (22, 1122, 1222, 1322, 1422) of the further guiding elements in the overlapping region extends on and along said axis (A).

3. The induction heating arrangement (1000) according to claim 1 or claim 2, wherein there are exactly three further guiding elements (21, 22, 23, 1121, 1122, 1123, 1221, 1222, 1223, 1321, 1322, 1323, 1421, 1422, 1423) in the overlapping region (3, 1511 to 1514), two first ones (21, 23, 1121, 1123, 1221, 1223, 1321, 1323, 1421, 1423) of these three further guiding elements being arranged spaced apart from said axis (A) and parallel or inclined to said axis (A), preferably on opposite sides of said axis (A), and one second one (22, 1122, 1222, 1322, 1422) of the three further guiding elements in the overlapping region extending on and along said axis (A) and/or being arranged in between the two first further guiding elements.

4. The induction heating arrangement according to claim 1, wherein there are exactly two further guiding elements (21, 23) in the overlapping region (3) both being arranged spaced apart from and parallel or inclined to said axis (A), preferably on opposite sides of said axis (A).

5. The induction heating arrangement (1000) according to any of claims 1 to 3, wherein two first further guiding elements (21, 23) within the overlapping region (3) are inclined at a respective inclination angle (α1, α2, α3, α4) to said axis (A), preferably in opposite inclination directions.

6. The induction heating arrangement (1000) according to claim 5, wherein longitudinal axes of the two first guiding elements (21, 23) or the legs of the inclination angles (α1, α2, α3, α4) intersect said axis (A) at a respective, in particular the same, point of intersection (IP) which is on the same side of the orthogonal projection of the respective guiding element (21, 23) onto said axis (A) as a centre (C1, C2) of either the first induction coil (1) or the second induction coil (2) and spaced apart from said centre (C1, C2), preferably at a larger distance from said orthogonal projection than said centre (C1, C2).

7. The induction heating arrangement (1000) according to any of claims 1, 2, 3 or 5 or 6, wherein at least one first further guiding element (21, 23), which is inclined to said axis (A), extends in a radial direction of the first induction coil (1) or the second induction coil (2).

8. The induction heating arrangement (1000) according to any of the preceding claims, wherein the further guiding elements (21, 22, 23) in the overlapping region (3) are arranged symmetrically to said axis (A).

9. The induction heating arrangement (1000) according to any of the preceding claims, wherein guiding elements (11 to 17, 25 to 29, 1110 to 1114, 1210 to 1214, 1310 to 1314, 1410 to 1414) outside of the overlapping region (3, 1511 to 1514) extend in a respective radial direction of the respective first induction coil (1, 1500) or second induction coil (2, 1100, 1200, 1300, 1400.

10. The induction heating arrangement (1000) according to any of the preceding claims, wherein the guiding elements are arranged or attached below or at the underside of the respective induction coil (1500, 1100, ..., 1400).

11. The induction heating arrangement (1000) according to any one of the previous claims comprising the support plate (1600) for an object to be heated such as a cooking vessel or cooking good carrier, wherein preferably the first induction coil (1500) is arranged on, in particular applied thereonto as a structured layer or as a pre-manufactured part, a lower surface of the support plate (1600) and wherein preferably the second induction coils are arranged further below the plate (1600), in particular attached or arranged at a lower surface of the first induction coil.

12. The induction heating arrangement (1000) according to any one of the previous claims comprising further a selector or control device (2300) configured to operate either, in a first operational state, the first induction coil (1500) while not operating any of the second induction coils (1100, 1200, 1300, 1400) or, in a second operational state, at least one of the second induction coils (1100, 1200, 1300, 1400) while not operating the first induction coil (1500).

13. The induction heating arrangement (1000) according to any one of the previous claims, wherein centres (M1 to M4) of all second induction coils (1100 to 1400) lie outside of the first induction coil (1500) and/or outside of the overlapping regions (1511 to 1514) and/or wherein each overlapping region (1511 to 1514) comprises less than 50 % and/or less than 180° angular sector of the corresponding second induction coil (1100 to 1400).

14. The induction heating arrangement (1000) according to any one of the previous claims, wherein at least two, in particular all, second induction coils have the same diameter and/or size and/or wherein at least one, preferably all, of the induction coils is or are of circular shape and/or wherein at least four second induction coils (1100, 1200, 1300 and 1400) are provided each being arranged in a corresponding quadrant (Q1 to Q4) of a rectangular or square shaped heating area (2000) defining heating zones and the first induction coil (1500) is arranged around a centre (M) of the heating area (2000) extending into each of the quadrants and defining another central heating zone.

15. An induction cooking hob (3000) comprising an induction heating arrangement (1000) according to any one of the claims 1 to 14.

## Patentansprüche

1. Induktionsheizanordnung (1000), umfassend:
- eine Trägerplatte (1600),
- mindestens eine erste Induktionsspule (1, 1500), die auf einer ersten Höhe bezüglich der Trägerplatte (1600) angeordnet ist,
- mindestens eine zweite Induktionsspule (2, 1100, 1200, 1300, 1400), die auf einer zweiten Höhe bezüglich der Trägerplatte (1600) angeordnet ist,
- wobei die zweite Induktionsspule (2, 1100, 1200, 1300, 1400) die erste Induktionsspule (1, 1500) in einem Überlappungsbereich (3, 1511, 1512, 1513 1514) teilweise überlappt,
- wobei außerhalb des Überlappungsbereichs (3, 1511 bis 1514) die erste Induktionsspule (1, 1500) und die zweite Induktionsspule (2, 1100, 1200, 1300, 1400) jeweils mehrere jeweilige Führungselemente (11 bis 17, 25 bis 29, 1110 bis 1114, 1210 bis 1214, 1310 bis 1314, 1410 bis 1414) zum Leiten des Magnetflusses der jeweiligen Induktionsspule aufweisen, **dadurch gekennzeichnet, dass**
- innerhalb des Überlappungsbereichs (3, 1511 bis 1514) mindestens zwei weitere Führungselemente (21, 22, 23, 1121, 1122, 1123, 1221, 1222, 1223, 1321, 1322, 1323, 1421, 1422, 1423) zum Leiten des Magnetflusses der ersten Induktionsspule (1, 1500) und/oder der zweiten Induktionsspule (2, 1100, 1200, 1300, 1400) in einem Abstand (d, D) voneinander angeordnet sind,
- wobei mindestens ein erstes (21, 23, 1121, 1123, 1221, 1223, 1321, 1323, 1421, 1423) der weiteren Führungselemente von einer Achse (A) beabstandet ist, wobei die Achse (A) in einer radialen Richtung der ersten Induktionsspule (1, 1500) von einem Mittelpunkt (C1) der ersten Induktionsspule (1, 1500) und in einer radialen Richtung der zweiten Induktionsspule (2, 1100, 1200, 1300, 1400) zu einem Mittelpunkt (C2) der zweiten Induktionsspule (2, 1100, 1200, 1300, 1400) verläuft und parallel oder schräg zur Achse (A) orientiert oder angeordnet ist.

2. Induktionsheizanordnung (1000) nach Anspruch 1, wobei mindestens ein zweites (22, 1122, 1222, 1322, 1422) der weiteren Führungselemente im Überlappungsbereich sich auf und entlang der Achse (A) erstreckt.

3. Induktionsheizanordnung (1000) nach Anspruch 1 oder Anspruch 2, wobei sich exakt drei weitere Führungselemente (21, 22, 23, 1121, 1122, 1123, 1221, 1222, 1223, 1321, 1322, 1323, 1421, 1422, 1423) im Überlappungsbereich (3, 1511 bis 1514) befinden, wobei zwei erste (21, 23, 1121, 1123, 1221, 1223, 1321, 1323, 1421, 1423) dieser drei weiteren Führungselemente im Abstand von der Achse (A) und parallel oder schräg zur Achse (A) angeordnet sind, vorzugsweise auf gegenüberliegenden Seiten der Achse (A), und ein zweites (22, 1122, 1222, 1322, 1422) der drei weiteren Führungselemente im Überlappungsbereich sich auf und entlang der Achse (A) erstreckt und/oder zwischen den zwei ersten weiteren Führungselementen angeordnet ist.

4. Induktionsheizanordnung nach Anspruch 1, wobei sich exakt zwei weitere Führungselemente (21, 23) im Überlappungsbereich (3) befinden, wobei beide im Abstand von und parallel oder schräg zur Achse (A) angeordnet ist, vorzugsweise auf gegenüberliegenden Seiten der Achse (A).

5. Induktionsheizanordnung (1000) nach einem der Ansprüche 1 bis 3, wobei zwei erste weitere Führungselemente (21, 23) im Überlappungsbereich (3) in einem jeweiligen Neigungswinkel (α1, α2, α3, α4) zur Achse (A), vorzugsweise in entgegengesetzten Neigungsrichtungen geneigt sind.

6. Induktionsheizanordnung (1000) nach Anspruch 5, wobei Längsachsen der zwei ersten Führungselemente (21, 23) oder die Schenkel der Neigungswinkel (α1, α2, α3, α4) die Achse (A) an einem jeweiligen, insbesondere am selben Schnittpunkt (IP) schneiden, der auf derselben Seite der orthogonalen Projektion des jeweiligen Führungselements (21, 23) auf die Achse (A) als ein Mittelpunkt (C1, C2) entweder der ersten Induktionsspule (1) oder der zweiten Induktionsspule (2) und im Abstand vom Mittelpunkt (C1, C2), vorzugsweise in einem größeren Abstand von der orthogonalen Projektion als der Mittelpunkt (C1, C2) liegt.

7. Induktionsheizanordnung (1000) nach einem der Ansprüche 1, 2, 3 oder 5 oder 6, wobei mindestens ein erstes weiteres Führungselement (21, 23), das zur Achse (A) geneigt ist, sich in einer radialen Richtung der ersten Induktionsspule (1) oder der zweiten Induktionsspule (2) erstreckt.

8. Induktionsheizanordnung (1000) nach einem der vorhergehenden Ansprüche, wobei die weiteren Führungselemente (21, 22, 23) im Überlappungsbereich (3) symmetrisch zur Achse (A) angeordnet sind.

9. Induktionsheizanordnung (1000) nach einem der vorhergehenden Ansprüche, wobei Führungselemente (11 bis 17, 25 bis 29, 1110 bis 1114, 1210 bis 1214, 1310 bis 1314, 1410 bis 1414) außerhalb des Überlappungsbereichs (3, 1511 bis 1514) sich in einer jeweiligen radialen Richtung der jeweiligen ersten Induktionsspule (1, 1500) oder der zweiten Induktionsspule (2, 1100, 1200, 1300, 1400) erstrecken.

10. Induktionsheizanordnung (1000) nach einem der vorhergehenden Ansprüche, wobei die Führungselemente unter oder an der Unterseite der jeweiligen Induktionsspule (1500, 1100, ..., 1400) angeordnet oder befestigt sind.

11. Induktionsheizanordnung (1000) nach einem der vorhergehenden Ansprüche, umfassend die Trägerplatte (1600) für einen zu erhitzenden Gegenstand, wie etwa ein Kochgefäß oder einen Kochgutträger, wobei die erste Induktionsspule (1500) vorzugsweise auf einer Unterseite der Trägerplatte (1600) angeordnet ist, insbesondere darauf als eine strukturierte Schicht oder als ein vorgefertigtes Teil angebracht ist, und wobei die zweiten Induktionsspulen vorzugsweise weiter unter der Platte (1600) angeordnet sind, insbesondere an einer Unterseite der ersten Induktionsspule befestigt oder angeordnet sind.

12. Induktionsheizanordnung (1000) nach einem der vorhergehenden Ansprüche, ferner umfassend eine Wähl- oder Steuervorrichtung (2300), die dazu ausgelegt ist, in einem ersten Betriebszustand entweder die erste Induktionsspule (1500) zu betätigen, während sie keine der zweiten Induktionsspulen (1100, 1200, 1300, 1400) betätigt, oder in einem zweiten Betriebszustand mindestens eine der zweiten Induktionsspulen (1100, 1200, 1300, 1400) zu betätigen, während sie die erste Induktionsspule (1500) nicht betätigt.

13. Induktionsheizanordnung (1000) nach einem der vorhergehenden Ansprüche, wobei Mittelpunkte (M1 bis M4) aller zweiten Induktionsspulen (1100 bis 1400) außerhalb der ersten Induktionsspule (1500) und/oder außerhalb der Überlappungsbereiche (1511 bis 1514) liegen und/oder wobei jeder Überlappungsbereich (1511 bis 1514) weniger als 50% und/oder weniger als 180° Winkelsektor der entsprechenden zweiten Induktionsspule (1100 bis 1400) umfasst.

14. Induktionsheizanordnung (1000) nach einem der vorhergehenden Ansprüche, wobei mindestens zwei der, insbesondere alle zweiten Induktionsspulen den gleichen Durchmesser und/oder die gleiche Größe aufweisen und/oder wobei mindestens eine der, vorzugsweise alle Induktionsspulen eine kreisförmige Gestalt aufweist bzw. aufweisen und/oder wobei mindestens vier zweite Induktionsspulen (1100, 1200, 1300 und 1400) bereitgestellt werden, von denen jede in einem entsprechenden Quadranten (Q1 bis Q4) einer rechteckig oder quadratisch geformten Heizfläche (2000), die Heizzonen definiert, angeordnet ist und die erste Induktionsspule (1500) um einen Mittelpunkt (M) der Heizfläche (2000) angeordnet ist, der sich in jeden der Quadranten erstreckt und eine andere zentrale Heizzone definiert.

15. Induktionskochfeld (3000), umfassend eine Induktionsheizanordnung (1000) nach einem der Ansprüche 1 bis 14.

## Revendications

1. Agencement de chauffage par induction (1000), comprenant :
une plaque de support (1600),
au moins une première bobine d'induction (1, 1500) agencée à un premier niveau par rapport à la plaque de support (1600),
au moins une seconde bobine d'induction (2, 1100, 1200, 1300, 1400) agencée à un second niveau par rapport à la plaque de support (1600),
la seconde bobine d'induction (2, 1100, 1200, 1300, 1400) chevauchant en partie la première bobine d'induction (1, 1500) dans une région de chevauchement (3, 1511, 1512, 1513, 1514),
à l'extérieur de la région de chevauchement (3, 1511 à 1514), la première bobine d'induction (1, 1500) et la seconde bobine d'induction (2, 1100, 1200, 1300, 1400) étant chacune munies de plusieurs éléments de guidage (11 à 17, 25 à 29, 1110 à 1114, 1210 à 1214, 1310 à 1314, 1410 à 1414) respectifs pour guider un flux magnétique de la bobine d'induction respective,
**caractérisé en ce que** :
dans la région de chevauchement (3, 1511 à 1514), au moins deux autres éléments de guidage (21, 22, 23, 1121, 1122, 1123, 1221, 1222, 1223, 1321, 1322, 1323, 1421, 1422, 1423) pour guider le flux magnétique de la première bobine d'induction (1, 1500) et/ou la seconde bobine d'induction (2, 1100, 1200, 1300, 1400) sont agencés à une distance (d, D) l'un de l'autre,
au moins un premier (21, 23, 1121, 1123, 1221, 1223, 1321, 1323, 1421, 1423) des autres éléments de guidage étant espacé d'un axe (A), ledit axe (A) s'étendant dans une direction radiale de la première bobine d'induction (1, 1500) à partir d'un centre (C1) de la première bobine d'induction (1, 1500) et dans une direction radiale de la seconde bobine d'induction (2, 1100, 1200, 1300, 1400) vers un centre (C2) de la seconde bobine d'induction (2, 1100, 1200, 1300, 1400), et étant orienté ou agencé parallèlement audit axe (A) ou étant incliné par rapport à celui-ci.

2. Agencement de chauffage par induction (1000) selon la revendication 1, dans lequel au moins un second (22, 1122, 1222, 1322, 1422) des autres éléments de guidage dans la région de chevauchement s'étend sur et suivant ledit axe (A).

3. Agencement de chauffage par induction (1000) selon la revendication 1 ou 2, comportant exactement trois autres éléments de guidage (21, 22, 23, 1121, 1122, 1123, 1221, 1222, 1223, 1321, 1322, 1323, 1421, 1422, 1423) dans la région de chevauchement (3, 1511 à 1514), deux premiers (21, 23, 1121, 1123, 1221, 1223, 1321, 1323, 1421, 1423) de ces trois autres éléments de guidage étant agencés séparés dudit axe (A) et parallèlement audit axe (A) ou incliné par rapport à celui-ci, de préférence sur des côtés opposés dudit axe (A), et un deuxième (22, 1122, 1222, 1322, 1422) des trois autres éléments de guidage dans la région de chevauchement s'étendant sur et le long dudit axe (A) et/ou étant agencé entre les deux premiers autres éléments de guidage.

4. Agencement de chauffage par induction selon la revendication 1, comportant exactement deux autres éléments de guidage (21, 23) dans la région de chevauchement (3) agencés l'un et l'autre séparés dudit axe (A) et parallèlement à celui-ci ou incliné par rapport à celui-ci, de préférence sur des côtés opposés dudit axe (A).

5. Agencement de chauffage par induction (1000) selon l'une quelconque des revendications 1 à 3, dans lequel deux premiers autres éléments de guidage (21, 23) dans la région de chevauchement (3) sont inclinés selon un angle d'inclinaison respectif (α1, α2, α3, α4) par rapport audit axe (A), de préférence dans des directions d'inclinaison opposées.

6. Agencement de chauffage par induction (1000) selon la revendication 5, dans lequel des axes longitudinaux des deux premiers éléments de guidage (21, 23) ou les segments des angles d'inclinaison (α1, α2, α3, α4) coupent ledit axe (A) à un point d'intersection (IP) respectif, en particulier au même IP, qui est situé sur le même côté de la projection orthogonale de l'élément de guidage (21, 23) respectif sur ledit axe (A) qu'un centre (C1, C2) de la première bobine d'induction (1) ou de la seconde bobine d'induction (2) et qui est espacé dudit centre (C1, C2), de préférence à une plus grande distance de ladite projection orthogonale que dudit centre (C1, C2).

7. Agencement de chauffage par induction (1000) selon l'une quelconque des revendications 1, 2, 3 et 5 et 6, dans lequel au moins un premier autre élément de guidage (21, 23), qui est incliné par rapport audit axe (A), s'étend dans une direction radiale de la première bobine d'induction (1) ou de la seconde bobine d'induction (2).

8. Agencement de chauffage par induction (1000) selon l'une quelconque des revendications précédentes, dans lequel les autres éléments de guidage (21, 22, 23) dans la région de chevauchement (3) sont agencés symétriquement par rapport audit axe (A).

9. Agencement de chauffage par induction (1000) selon l'une quelconque des revendications, dans lequel des éléments de guidage (11 à 17, 25 à 29, 1110 à 1114, 1210 à 1214, 1310 à 1314, 1410 à 1414) à l'extérieur de la région de chevauchement (3, 1511 à 1514) s'étendent dans une direction radiale respective de la première bobine d'induction (1, 1500) ou de la seconde bobine d'induction (2, 1100, 1200, 1300, 1400) respective.

10. Agencement de chauffage par induction (1000) selon l'une quelconque des revendications précédentes, dans lequel les éléments de guidage sont agencés ou fixés sous ou au niveau du dessous de la bobine d'induction (1500, 1100, ..., 1400) respective.

11. Agencement de chauffage par induction (1000) selon l'une quelconque des revendications précédentes, comprenant la plaque de support (1600) pour un objet à chauffer comme un récipient de cuisson ou un support de produit alimentaire, dans lequel de préférence la première bobine d'induction (1500) est agencée sur une surface inférieure de la plaque de support (1600), en particulier appliquée sur celle-ci comme une couche structurée ou comme une pièce préfabriquée, et dans lequel de préférence les secondes bobines d'induction sont agencées plus loin sous la plaque (1600), en particulier fixées à une surface inférieure de la première bobine d'induction ou agencées au niveau d'une surface inférieure de celle-ci.

12. Agencement de chauffage par induction (1000) selon l'une quelconque des revendications précédentes, comprenant en outre un sélecteur ou dispositif de contrôle (2300) configuré pour faire fonctionner, dans un premier état opérationnel, la première bobine d'induction (1500) sans faire fonctionner aucune des secondes bobines d'induction (1100, 1200, 1300, 1400) ou, dans un second état opérationnel, au moins une des secondes bobines d'induction (1100, 1200, 1300, 1400) sans faire fonctionner la première bobine d'induction (1500).

13. Agencement de chauffage par induction (1000) selon l'une quelconque des revendications précédentes, dans lequel des centres (M1 à M4) de toutes les secondes bobines d'induction (1100 à 1400) se trouvent à l'extérieur de la première bobine d'induction (1500) et/ou à l'extérieur des régions de chevauchement (1511 à 1514) et/ou dans lequel chaque région de chevauchement (1511 à 1514) comprend moins de 50 % et/ou moins d'un secteur angulaire de 180° de la seconde bobine d'induction (1100 à 1400) correspondante.

14. Agencement de chauffage par induction (1000) selon l'une quelconque des revendications précédentes, dans lequel au moins deux secondes bobines d'induction, en particulier la totalité des secondes bobines d'induction, ont le même diamètre et/ou la même taille et/ou dans lequel au moins une bobine d'induction, en particulier la totalité des bobines d'induction, est ou sont de forme circulaire et/ou dans lequel au moins quatre secondes bobines d'induction (1100, 1200, 1300 et 1400) sont situées chacune de manière à être agencées dans un quadrant (Q1 à Q4) correspondant d'une zone de chauffage de forme rectangulaire ou carrée (2000) définissant des zones de chauffage et la première bobine d'induction (1500) est agencée autour d'un centre (M) de la zone de chauffage (2000) s'étendant dans chacun des quadrants et définissant une autre zone de chauffage centrale.

15. Bouton de cuisson par induction (3000) comprenant un agencement de chauffage par induction (1000) selon l'une quelconque des revendications 1 à 14.
